# EUROPEAN PATENT SPECIFICATION

(11) **EP 1 739 617 B1**
(45) Date of publication and mention of the grant of the patent: **10.09.2014**
(21) Application number: 05106016.8
(22) Date of filing: 01.07.2005
(51) Int. Cl.: G06T 1/00, G10L 19/00

(54) **Countermeasure for collusion attacks in digital watermarking**
Abwehr von Absprachen-Angriffen auf digitale Wasserzeichen
Contre-mesures aux attaques par collusion sur des filigranes numériques

(43) Date of publication of application: 03.01.2007
(73) Proprietor: Fraunhofer-Gesellschaft zur Förderung der angewandten Forschung e.V., 80686 München (DE)
(72) Inventor: Dr. Steinebach, Martin, 64859 Eppertshausen (DE); Zmudzinski, Sascha, 60316 Frankfurt (DE)
(74) Representative: Von Kreisler Selting Werner - Partnerschaft von Patentanwälten und Rechtsanwälten mbB

(56) References cited:
- EP-A- 0 951 183
- US-B1- 6 430 301
- BAAZIZ N ET AL: "Attacks on Collusion-Secure Fingerprinting for Multicast Video Protocols" DISTRIBUTED FRAMEWORKS FOR MULTIMEDIA APPLICATIONS, 2005. DFMA '05. FIRST INTERNATIONAL CONFERENCE ON BESONCON, FRANCE 06-09 FEB. 2005, PISCATAWAY, NJ, USA,IEEE, 6 February 2005 (2005-02-06), pages 210-216, XP010770162 ISBN: 0-7695-2273-4
- [Online] Retrieved from the Internet: <URL:www.opticom.de/technology/technology.h tml>
- [Online] Retrieved from the Internet: <URL:www.opticom.de/technology/assessing-qu ality.html>
- THILO THIEDE, WILLIAM C. TREURNIET, ROLAND BITTO, THOMAS SPORER, KARLHEINZ BRANDENBURG, CHRISTIAN SCHMIDMER, MICHAEL KEYHL ET AL.: 'PEAQ - der künftige ITU-Standard zur objektiven Messung der wahrgenommenen Audioqualität', [Online] pages 1 - 43 Retrieved from the Internet: <URL:http://elvera.nue.tu-berlin.de/files/0 829Thiede1998.pdf>

## Description

### BACKGROUND

### Field of the Invention

The present invention relates to a method for creating individually watermarked copies of original video and/or audio media data which leads to individually watermarked copies of the original media data for fighting at-tacks aimed at individual customer identification watermarks, also called active fingerprints.

The expansion of digital networks all over the world allows extensive access on and reuse of media data and, in particular, video and/or audio data material. Problems include unauthorised recording, manipulating or removing of data, which might lead to loss of sales or legal problems for the producers and creators. Thus, designers, producers and publishers of digital data like images, video, audio or multimedia material are seeking technical solutions to the problems associated with copyright protection of multimedia data. The Internet has become in many cases a trading place for illegal copies of movies, music and software. Thus, systems are required which provide environments where digital data can be signed by authors or producers as their intellectual property, i.e. by embedding private or public information into the video data, to ensure and proof ownership rights on the produced video and audio material during its distribution. Digital watermarking in combination with active fingerprinting algorithms offers a solution to trace illegal copies.

### Related Prior Art

Digital watermarking can be used to embed individual customer identification data into copies of digital media data, like images, videos or audio data. This is archived by using the same watermarking algorithm to embed different binary sequences into the data. These binary sequences can be a representation of a customer number, a simple continuous counter or more complex digital fingerprints. Thereby copies of the original media are produced which differ only with respect to the embedded information. Technically, the data is almost identical but differs at some positions by some noisy-like characteristics.

White today's watermarking algorithms are well developed with respect to transparency and robustness, one important weakness is their vulnerability to collusion attacks.

In general watermarking algorithms use different methods to embed a message M (watermark) into a cover C (media data). As an example, an audio watermarking algorithm is used to embed a fingerprint bit vector FP as M. The way M is embedded in C is relevant for the security of the watermarking and fingerprinting combination: For example, a PCM audio stream consists of a sequence of audio samples over time. Most multi-bit message audio watermarking algorithms use a group of successive samples, e.g. 2048, to embed a single bit of the complete message. The bit sequence 01011 is embedded consecutively in an audio segment by separating the audio signal into groups of samples and embedding one bit in each of the groups.

This leads to the following situation: If two different bit vectors are embedded in two copies of the same cover with the same key, the two copies differ exactly in those segments where different bits have been embedded as information. An example: To distinguish the copies given to two customers A and B two bit vectors "01011" and "00001" have been embedded into C, producing one copy of C marked "01011" and one copy marked "00001". If the customers A and B compare their copies, they find equal segments at position 1,3 and 5 and different segments at position 2 and 4. To produce a copy leaving a watermark different from the watermarks of their copies, they could randomly select which of the segments 2 and 4 they use. As long as they do not produce a copy, which is equal to one of their original copies by that, they will create a sound file with excellent audio quality but with a watermark which points at an innocent third party. Possible results would be "01001" or "00011".

Baaziz N. et al.: "Attacks on Collusion-Secure Fingerprinting for Multicast Video Protocols", Distributed frameworks for multimedia applications, 2005. DFMA 05. Besoncon, France 06-09 February 2005, Piscataway, Nj. USA IEEE; 6 February 2005, pages 210-216, XP010770162, ISBN: 0-7695-2273-4 describes collusion attacks on digital watermarking, wherein multiple copies of individually marked content are divided into small segments and a new copy is generated by merging the segments from multiple sources into one copy. As the loss of quality is minimal in this case, the resulting file (a) has a good quality and (b) includes watermark fragments from multiple individual segments of the original copies from which either no complete or only a wrong watermark can be retrieved.

Other attacks aim at rendering the watermark undetectable by mixing the differing positions sample-wise or by averaging the sample values.

### SUMMARY OF THE INVENTION

The present invention provides a method for creating individually watermarked copies of original video and/or audio media data for producing perceivable distortions when two individually watermarked copies are subjected to a collusion attack, the method comprising the steps of claim 1.

The solution to this problem proposed according to the invention is based on slight modifications of the media data the watermarks are embedded into. The nature of these changes is twofold: On the one hand, the changes do not result in perceived loss of quality in the individual copies. On the other hand, after running an attack as the ones described above, a significant loss of quality occurs.

This is done by e.g. slight modifications of the running length of the media data. This masks the differences between the individual copies caused by the embedding of the watermark as differences are now detected in most passages of the media files. It also produces significant artefacts when mixing two individually marked copies into each other. Another method is to modify phase information leading to phase errors after attacks.

The invention proposes an automated mechanism which
- adds slight modifications into a media file while embedding the watermark
- uses the knowledge about the watermark embedding positions to identify suited positions in the file to add these modifications
- controls the modifications in such a way that no loss of quality occurs when using this mechanism on a single media copy
- creates modified media files which show significant quality losses after collusion attacks by two or more attackers.

The solution proposed according to the invention improves the security of customer identification watermarks by disabling simple automated attacks to remove or distort these watermarks. While no loss of quality is perceived in media copies treated by our mechanism, significant quality losses occur after attacks.

Accordingly, the present invention provides a novel method to fight attacks aimed at individual customer identification watermarks, also called active fingerprints. This is achieved by modifying the watermarked material in a way collusion attacks produce artefacts, which significantly reduce the perceived quality.

### BRIEF DESCRIPTION OF THE DRAWINGS

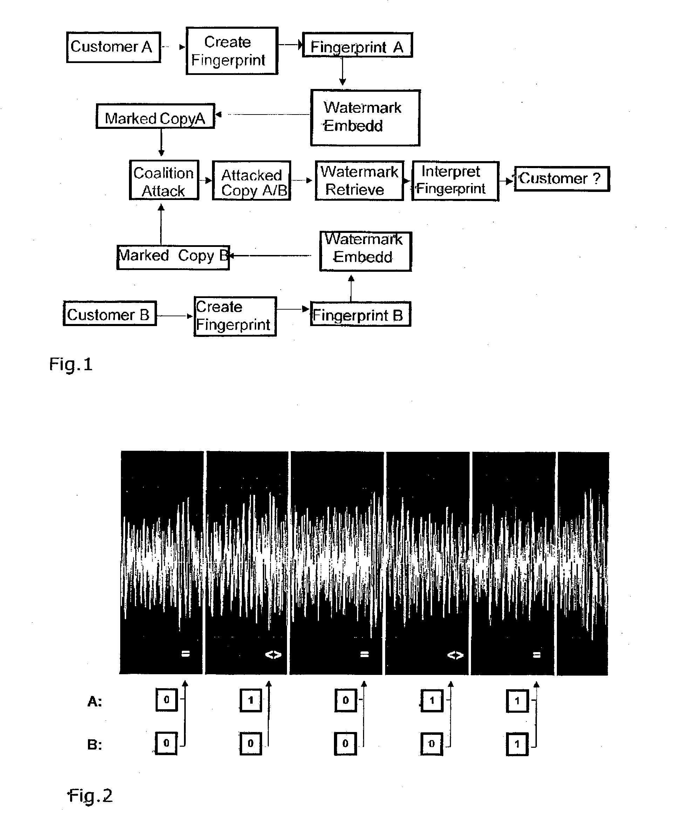

The invention will be described in more detail referring to the drawing in which
- Fig. 1: is a fingerprint attack scheme with two attackers
- Fig. 2: shows different embedded bit vectors leading to different segments in the copies of a watermarked audio signal and

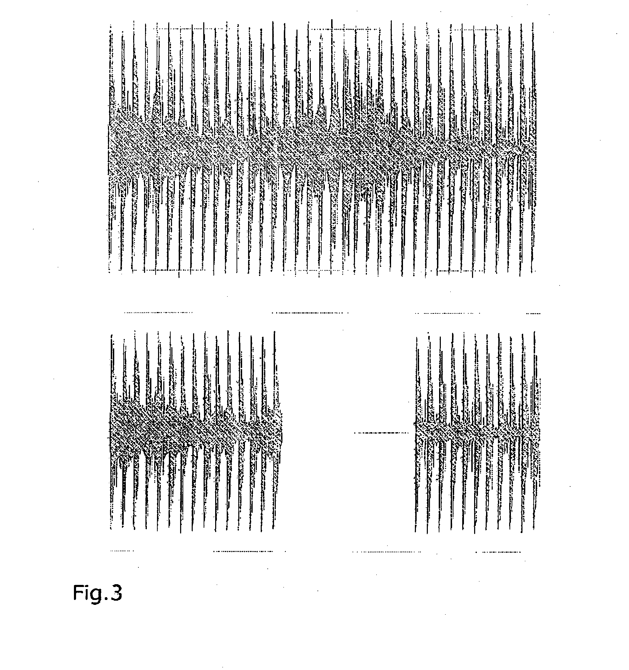

- Fig. 3: shows the original and possible result of collusion attack after protecting individual copies by phase changes.

### DESCRIPTION OF A PREFERRED EMBODIMENT

As an example, a mechanism for PCM audio fingerprint protection is described.

Two methods are used for the protection mechanism:
- Sample addition and removal: Samples are duplicated or deleted pseudo-randomly. Only suited samples are selected, which are identified by small sample values. Adding and removing of samples can alternatively be applied by means of time stretching. These sample changes are not audible in an individual copy. But if two copies are mixed, the sample values of one copy are e.g. averaged with their neighbours of the second copies and not themselves due to the sample addition or removal. This leads to changes in the perceived audio data, producing a flanging effect, similar to a hiss. Modifying an audio file multiple times in this way increases the effect.
- Phase changes: The phase of the PCM samples is inverted under control of a pseudo-random key. To create inaudible phase changes, they occur only at minimal sound levels. This leads to copies of an audio file where the phases are inverse to each other at some positions. When averaging the samples, inverse phases extinct each other, creating gaps in the attacked audio file. When randomly selecting samples from two or more audio files as an attack, the inverse phases lead to phase errors and audible clicking artefacts.

Both methods are combined into a system which individually modifies each copy of a fingerprinted audio file in a way that any collusion attack using one or more of these files will lead to audible artefacts rendering the attacked copy useless. While the fingerprint may not be readable from this attached copy, its value is also very limited. The modifications can be optimized in a way that they take into account the minimal amount of samples needed to embed a watermarking bit, leading to especially efficient implementations.

## Claims

1. Method for creating individually watermarked copies of original video and/or audio media data for producing perceivable distortions when two individually watermarked copies are subjected to a collusion attack, the method comprising the following steps:
- dividing the original media data into consecutive frames,
- creating a first copy of the original media data by
1) embedding individual bits of a digital watermark into consecutive frames of the original media data wherein into each of these consecutive frames one bit of the digital watermark is embedded, and
2) amending the media data in at least one of its frames provided with an embedded bit of the digital watermark such that the amended media data are free of a perceived loss of quality, and
- creating at least a second copy of the original media data in the same way as mentioned before but with a digital watermark and an amendment to the media data which are different from the digital watermark and amendment used for any other created copy of the original media data,
- wherein when performing collusion attack on two created copies of the media data by building the average of these two copies, the amendments produce a perceivable loss of quality of the media data, and
- wherein the amendments comprise at least one of deleting or duplicating at least one sample of the media data within at least one of its frames randomly or pseudo randomly, inverting randomly or pseudo randomly the phase of at least one of the samples of the media data in at least one of its frames, and amending at least one sample of the media data within at least one of its frames by in particular randomly or pseudo randomly time stretching.

## Patentansprüche

1. Verfahren zum Herstellen individuell mit Wasserzeichen versehener Kopien von Original-Video- und/oder Audio-Mediendaten zur Erzeugung wahrnehmbarer Verzerrungen, wenn zwei individuell mit Wasserzeichen versehene Kopien einem Kollusionsangriff ausgesetzt werden, wobei das Verfahren die folgenden Schritte aufweist:
- Unterteilen der Original-Mediendaten in aufeinanderfolgende Rahmen,
- Erzeugen einer ersten Kopie der Original-Mediendaten durch
1) Einbetten individueller Bits eines digitalen Wasserzeichens in aufeinanderfolgende Rahmen der Original-Mediendaten, wobei in jeden dieser aufeinanderfolgenden Rahmen ein Bit des digitalen Wasserzeichens eingebettet wird, und
2) Ändern der Mediendaten in mindestens einem ihrer mit einem eingebetteten Bit des digitalen Wasserzeichens versehenen Rahmen derart, dass die korrigierten Daten frei von einem wahrnehmbaren Qualitätsverlust sind, und
- Herstellen mindestens einer zweiten Kopie der Original-Mediendaten in der gleichen Weise wie zuvor erwähnt, jedoch mit einem digitalen Wasserzeichen und einer Änderung, die sich von dem digitalen Wasserzeichen bzw. der Änderung unterscheiden, welche für jegliche andere hergestellte Kopie der Original-Mediendaten verwendet werden,
- wobei, wenn ein Kollusionsangriff auf zwei hergestellte Kopien von Mediendaten vorgenommen wird, indem der Mittelwert dieser zwei Kopien erzeugt wird, die Änderungen einen wahrnehmbaren Qualitätsverlust der Mediendaten verursachen, und
- wobei die Änderungen das zufällige oder pseudozufällige Löschen und/oder Duplizieren mindestens einer Abtastung der Mediendaten in mindestens einem ihrer Rahmen, das zufällige oder pseudozufällige Invertieren der Phase mindestens eines der Abtastwerte der Mediendaten in mindestens einem ihrer Rahmen und das Ändern mindestens eines Abtastwerts der Mediendaten in mindestens einem ihrer Rahmen insbesondere durch zufällige oder pseudozufällige Zeitdehnung umfassen.

## Revendications

1. Procédé pour créer des copies filigranées individuellement de données de media vidéo et/ou audio originales pour produire des distorsions perceptibles lorsque deux copies filigranées individuellement sont soumises à une attaque de collusion, le procédé comprenant les étapes suivantes :
- la division des données de media originales en trames consécutives,
- la création d'une première copie des données de media originales par :
1) incorporation de bits individuels d'un filigrane numérique dans des trames consécutives des données de media originales, un bit du filigrane numérique étant incorporé dans chacune de ces trames consécutives, et
2) modification des données de media dans au moins l'une de ses trames comportant un bit incorporé du filigrane numérique de telle sorte que les données de média modifiées soient exemptes d'une perte de qualité perçue, et
- la création d'au moins une deuxième copie des données de media originales de la même façon que mentionné précédemment, mais avec un filigrane numérique et une modification des données de media qui sont différents du filigrane numérique et de la modification utilisés pour toute autre copie créée des données de media originales,
- dans lequel, lors de la réalisation d'une attaque de collusion sur deux copies créées des données de media par construction de la moyenne de ces deux copies, les modifications produisent une perte de qualité perceptible des données de media, et
- dans lequel les modifications comprennent au moins une suppression ou une duplication d'au moins un échantillon des données de media à l'intérieur d'au moins l'une de ses trames de façon aléatoire ou pseudo-aléatoire, une inversion aléatoire ou pseudo-aléatoire de la phase d'au moins l'un des échantillons des données de media dans au moins l'une de ses trames, et une modification d'au moins un échantillon des données de media à l'intérieur d'au moins l'une de ses trames en particulier par étirement du temps de façon aléatoire ou pseudo-aléatoire.
